# FASCICULE DE BREVET EUROPEEN

(11) **EP 1 859 614 B1**
(45) Date de publication et mention de la délivrance du brevet: **07.03.2018**
(21) Numéro de dépôt: 06708756.9
(22) Date de dépôt: 14.03.2006
(51) Int. Cl.: H04N 5/14, G06F 17/30

(54) **PROCEDE DE SELECTION DE PARTIES D'UNE EMISSION AUDIOVISUELLE ET DISPOSITIF METTANT EN UVRE LE PROCEDE**
VERFAHREN ZUM AUSWÄHLEN VON TEILEN EINES AUDIOVISUELLEN PROGRAMMS UND EINRICHTUNG DAFÜR
METHOD FOR SELECTING PARTS OF AN AUDIOVISUAL PROGRAMME AND DEVICE THEREFOR

(30) Priorité: 17.03.2005 FR 0550690
(43) Date de publication de la demande: 28.11.2007
(73) Titulaire: Thomson Licensing, 92130 Issy-les-Moulineaux (FR)
(72) Inventeur: OISEL, Lionel, F-35137 LA NOUAYE (FR); KIJAK, Ewa, F-35440 Dinge (FR); RICHARD, William, F-35890 LAILLE (FR)
(74) Mandataire: Huchet, Anne
(86) Numéro de dépôt international: PCT/EP2006/060706
(87) Numéro de publication internationale: WO 2006/097471

(56) Documents cités:
- WO-A-02/07164
- WO-A-2004/014061
- US-A- 5 708 767
- US-A1- 2002 184 220
- US-B1- 6 631 522

## Description

L'invention concerne un procédé de sélection et de reproduction de séquences vidéo extraites d'un document vidéo, ainsi qu'un dispositif mettant en oeuvre le procédé. L'invention s'applique plus particulièrement lorsque les séquences vidéo sont sélectionnées à partir de plusieurs moyens d'extraction activables par un utilisateur.

Le contexte de la présente invention est celui de l'extraction de séquences vidéo à partir d'un document vidéo. De nos jours, de très nombreux documents vidéo sont produits, le tri et le découpage manuel ne sont plus possibles, il importe donc de développer des outils robustes d'analyse automatique de ces contenus. Il existe de nombreuses techniques automatiques de découpage d'un document vidéo. Un des buts de découper un document vidéo est d'en extraire les meilleurs moments du document et de pouvoir fournir à l'utilisateur un résumé en concaténant ces meilleurs moments. Le domaine des événements sportifs est particulièrement demandeur de moyens d'analyse des contenus vidéo. Les moyens d'analyse peuvent être adaptés à chaque sport, mais cela nécessite autant de moyens que de sports pratiqués, de plus certaines techniques peuvent convenir plus ou moins à un même sport, et inversement.

Certains sports dépendent fortement du temps, par exemple le football qui se joue en deux mi-temps de quarante cinq minutes. Pour d'autres sports, c'est le score qui importe, par exemple le tennis où le gagnant est celui qui emporte deux ou trois sets, quel que soit le temps pour y parvenir. Il importe donc de tenir compte de la contrainte soit du temps, soit du score pour analyser le document et en extraire des séquences.

Les événements sportifs sont filmés à partir d'un nombre fixe de caméras réparties autour de l'aire de jeu afin de pouvoir capturer au mieux l'action. Lors de la diffusion, l'opérateur sélectionne le point de vue, c'est-à-dire la caméra rendant le mieux compte de l'action en cours. De cette règle élémentaire à la base du processus d'édition découle un ensemble de règles de production, partagé par toutes les vidéos de sport professionnelles. De ce fait, un document sportif diffusé est déjà en soi une concaténation de séquences extraites de plusieurs sources.

Si l'opérateur considère que certaines séquences sont particulièrement intéressantes, par exemple dans un match de football des actions devant le but, il les marque comme tel et ces séquences sont rediffusées ensuite au ralenti. La demande de brevet PCT/FR01/03377 déposée par la demanderesse décrit une façon d'élaborer un résumé à partir de l'extraction des séquences de ralenti, la concaténation des séquences de ralenti produisant le résumé. Mais cette technique nécessite d'abord une analyse de l'utilisateur pour sélectionner la séquence et la diffuser au ralenti.

Dans le cas ou le document n'est pas préalablement traité, il importe de disposer de moyens d'analyse pour extraire automatiquement des informations de haut niveau permettant de découper le document en séquences et de les caractériser. Ces séquences seront ensuite facilement accessibles par des commandes de navigation. L'utilisateur pourra ainsi parcourir le document en recherchant des événements bien spécifiques.

Une première technique d'analyse va consister à retrouver la structure d'un document vidéo connaissant a priori le type du document considéré ainsi que le modèle de structure vidéo associé. Cette technique est utilisée pour analyser des événements sportifs. L'analyse consiste à prendre en compte la structure fixe intrinsèque au sport considéré et la structure plus aléatoire lié aux règles de montage utilisées. Une méthode d'estimation utilisée est détaillée dans les demandes de brevet françaises FR02.13977 et FR02.13978 déposées le 28 octobre 2002 par la demanderesse.

Une autre technique consiste à extraire des séquences et à les indexer selon des types d'événements. Ainsi, pour le tennis, il est possible de trouver les premiers services ratés, les passings shots ... Une navigation utilisant ces index présente cependant un intérêt limité pour les sports contraints par le score, le nombre d'index peut être faible par rapport à celui des éléments de structure. Dans ce type de sports, la navigation préférentielle se fera donc en utilisant la structure. Les index sont constitués de listes de pointeurs vers des moments importants et caractéristiques du contenu vidéo.

Dans le cas des sports contraints par le temps, la table des index est primordiale. Dans l'exemple du football, la structure d'un match de football est relativement pauvre (deux mi-temps constituées d'un certain nombre de plans). Une table des index ne peut pas se déduire immédiatement du découpage structurel du match. Il est nécessaire dans ce cas de développer des algorithmes dédiés à l'extraction d'index.

Le document US 2002/184220 - TERAGUCHI décrit une méthode pour indexer un document audiovisuel selon différents critères. Il est alors possible d'effectuer des sélections de parties du documents en fonction de plusieurs critères. La figure 21 et le texte correspondant montre un découpage en séquence d'un match de Baseball. Les séquences sont caractérisées par des actions prédéterminées, et attribuées à l'une ou l'autre équipe. Rien dans ce document ne laisse suggérer un découpage d'une autre façon que l'indexation.

Le document US 5 708 767 - YEO décrit une méthode pour décomposer automatiquement un document audiovisuel afin de déterminer un graphe des différentes séquences. Le graphe est ensuite représenté par de petites images à l'écran avec les liens. Les images affichées servent d'index permettant à l'utilisateur de naviguer de séquences en séquences. Rien dans ce document ne laisse suggérer un découpage d'une autre façon que l'indexation.

Le document US 2004/014061 - University of Rochester décrit une méthode d'analyse et de décomposition de documents audiovisuels liés au sport (soccer). Le procédé permet de détecter les séquences au ralenti et les buts. Le document US 6 631 522 - ERDELYI décrit une interface utilisateur permettant de naviguer sur des séquences vidéo d'un document de sport. La sélection des séquences vidéo s'effectue en fonction de critères que l'utilisateur peut sélectionner à l'aide d'un menu affiché. Tous ces documents n'offrent à l'utilisateur qu'un seul moyen de décomposition et finalement ne permettent pas une grande finesse de choix de séquences.

On voit donc que chaque technique d'analyse présente des avantages en fonction de la nature du document analysé. La présente invention offre une nouvelle façon d'extraire des séquences d'un document afin de les enregistrer ou les reproduire, ceci pour répondre au mieux au mieux à l'intérêt de l'utilisateur.

A cet effet, l'invention concerne un procédé de sélection de parties d'un document audiovisuel, comportant une étape d'analyse du document par au moins deux moyens de découpage différents, les deux moyens de découpage produisant deux groupes de séquences différentes extraites du document audiovisuel ;
caractérisé en ce qu'il comporte en outre les étapes suivantes :
- introduction d'au moins deux critères de sélection de séquences, chacun associé à un des deux au moins moyens de découpage,
- sélection d'au moins une séquence d'un groupe en fonction d'un critère de sélection introduit associé à un moyen de découpage, une partie au moins de la séquence sélectionnée est commune à une autre séquence de l'autre groupe, cet autre séquence répondant à un autre critère de sélection introduit associé à l'autre moyen de découpage.

De cette façon, l'utilisateur peut choisir des critères de sélection propres à chacun des moyens de découpage de façon que les séquences ainsi sélectionnées répondent au mieux aux souhaits de l'utilisateur. La sélection des parties du document visualisées est ainsi plus fine que si on utilise l'un ou l'autre moyen de découpage.

Selon un premier perfectionnement, l'utilisateur peut choisir le moyen de découpage dans le groupe duquel les séquences sont sélectionnées. De cette façon, les séquences sélectionnées sont obtenues par un découpage selon un moyen de découpage sélectionné par l'utilisateur.

Selon un autre perfectionnement, le procédé comporte en outre une étape d'élaboration d'un résumé obtenu par la concaténation des séquences sélectionnées. Selon une première variante, les séquences composant ce résumé sont ordonnées dans l'ordre chronologique défini dans le document audiovisuel initial. Selon une seconde variante, les séquences composant ce résumé sont ordonnées selon l'ordre défini par l'introduction des critères de sélection. De cette façon, l'utilisateur peut choisir l'organisation du résumé ainsi créé.

Selon un autre perfectionnement, le document audiovisuel initial est composé de documents primaire et/ou final issus de sources différentes. Le procédé comporte une étape de sélection d'un document primaire et/ou final, les moyens de découpage produisant les groupes de séquences à partir du document primaire et/ou final sélectionné. De cette façon, l'utilisateur peut sélectionner le document qui fait ensuite l'objet d'un découpage optimum par les moyens de découpage.

Selon un autre perfectionnement, le procédé comporte une étape de substitution d'une séquence sélectionnée par une autre séquence extraite d'un autre document primaire et/ou final, la nouvelle séquence posséde la même fenêtre temporelle que la séquence substituée au sein du document initial. De cette façon, l'utilisateur peut remplacer une séquence sélectionnée par les critères de sélection par une autre séquence provenant d'une autre source et qui lui semble plus intéressante.

Selon un autre perfectionnement, le procédé comporte une étape d'élaboration d'un indice de satisfaction affecté à une séquence élaborée par un des moyens de découpage. Cet indice est alors un critère de sélection, ce qui permet à l'utilisateur d'affiner la sélection des séquences et de ne garder que les plus satisfaisantes. Selon une première variante, l'indice de satisfaction provient de l'analyse d'une grandeur physique de la séquence, tel que le son. Cette variante permet un calcul automatique de l'indice de satisfaction. Selon une seconde variante, l'indice de satisfaction est introduit manuellement, ce qui permet d'introduire un critère subjectif de sélection.

Selon un autre perfectionnement, une barre graphique est affichée qui représente une partie au moins du document initial en fonction du temps et qui montre la position des séquences sélectionnées. Ainsi l'utilisateur voit à quels moments du document initial sont extraits les séquences sélectionnées. Selon un perfectionnement, la barre graphique montre par une icône associée à chaque représentation de séquence la valeur de l'indice de satisfaction associé à cette séquence.

L'invention a aussi pour objet un dispositif de visualisation de contenus vidéo comportant au moins deux moyens de découpage différents, chaque moyen de découpage produisant un groupe de séquences vidéo extraites d'un document vidéo ou audiovisuel ; caractérisé en ce qu'il comporte une interface graphique comportant :
- deux zones au moins affichant chacune une liste de critères de sélection associé chacune à un moyen de découpage,
- un moyen pour sélectionner au moins un critère dans chacune des deux listes de critères affichées,
- une zone de visualisation d'au moins une séquence d'un groupe sélectionnée en fonction d'un critère de sélection associé à un moyen de découpage, une partie au moins de la séquence sélectionnée est commune à une autre séquence de l'autre groupe, cet autre séquence répondant à un autre critère de sélection associé à l'autre moyen de découpage.

D'autres caractéristiques et avantages de la présente invention ressortiront de la description des exemples de réalisation qui vont suivre, pris à titre d'exemples non limitatifs, en référence aux figures annexées dans lesquelles :
- la figure 1 représente un organigramme général des étapes selon un exemple de réalisation de l'invention,
- la figure 2 représente un système pour l'acquisition de contenus audiovisuels utilisés pour la mise en oeuvre de l'invention,
- la figure 3 représente un schéma montrant la structure hiérarchique d'un match de tennis,
- la figure 4 illustre la façon de segmenter un document audiovisuel comme un match de tennis,
- la figure 5 montre un mécanisme d'extraction de séquences d'index au sein d'un document audiovisuel,
- la figure 6 présente une apparence d'écran selon un exemple de réalisation de l'invention permettant de sélectionner et de reproduire des séquences d'un document audiovisuel,
- la figure 7 présente une apparence d'écran selon un autre exemple de réalisation de l'invention comportant deux perfectionnements pour la sélection des séquences.

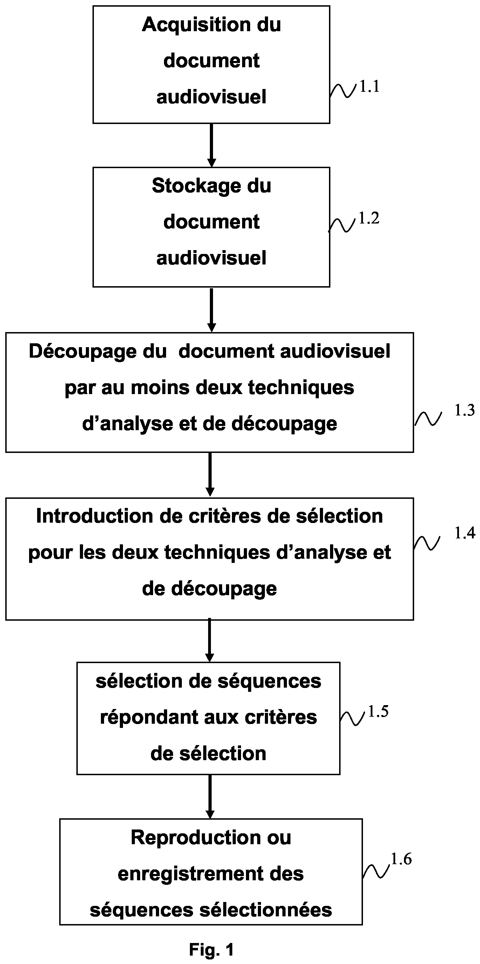

La figure 1 représente un organigramme général des étapes permettant de sélectionner des séquences et de les reproduire ou de les enregistrer. Selon un exemple de réalisation préférée, le procédé comporte cinq étapes. Dans un premier temps - étape 1.1, un document audiovisuel est produit. Ce document audiovisuel est un fichier de données numériques d'images, éventuellement associé à une composante sonore. Les images sont avantageusement animées, mais le document peut aussi être constitué de photos. Dans un second temps - étape 1.2, le document est mémorisé sous une forme aisément téléchargeable. Ensuite, le document est traité par un procédé de découpage en séquence - étape 1.3. Au moins deux techniques d'analyse vont être mises en oeuvre afin de produire deux groupes de séquences ayant chacun des critères de sélection propres. Puis à l'étape 1.4, le document est téléchargé sur un appareil de visualisation et un utilisateur introduit des critères de sélection conformément aux deux techniques d'analyse utilisées précédemment. Deux sous-groupes de séquences sont alors élaborés, chaque séquence d'un sous groupe est extraite du groupe précédemment élaboré et répond au critère de sélection introduit. A l'étape 1.5, les séquences répondant à l'ensemble des critères de sélection précédemment introduits sont sélectionnées. Dans la mesure où les découpages temporels selon l'un ou l'autre des moyens d'analyse et de découpage sont différents, les séquences sélectionnées sont celles dont une partie au moins répond à l'ensemble des critères introduits. Pour cela, on prend une séquence d'un premier sous-groupe, si une partie au moins de cette séquence est commune à une autre séquence appartenant à l'autre sous-groupe alors, elle est sélectionnée, sinon elle est rejetée. Le processus de sélection s'arrête lorsque toutes les séquences du premier groupe ont été traitées. A l'étape 1.6, les séquences sélectionnées sont reproduites et/ou enregistrées afin de réaliser une partition du document répondant aux critères introduits.

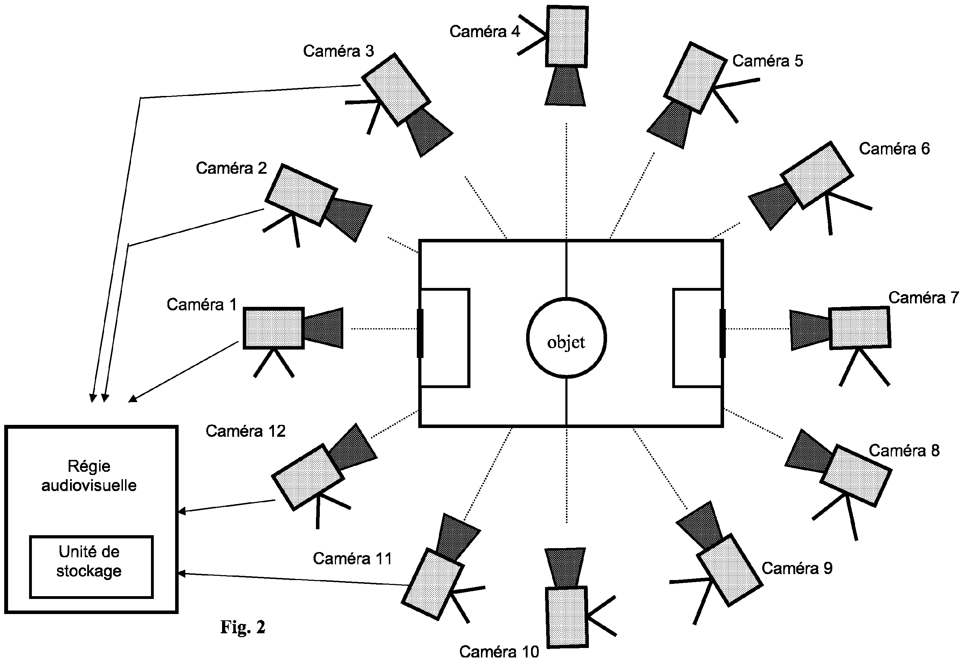

La figure 2 illustre une situation de production d'un document audiovisuel, le contenu audiovisuel ainsi produit sera ensuite traité selon le procédé qui est un des objets de la présente invention. La figure 2 concerne un match de football, mais cet exemple n'est pas limitatif et tout autre document audiovisuel soit dans un autre sport, soit dans un domaine différent du sport peut convenir et être utilisé par la présente invention.

Le système illustré par la figure 2 comprend :
- un ensemble de caméras et de micros filmant l'événement,
- une régie audiovisuelle locale pour recevoir les contenus audiovisuels provenant des caméras et des microphones disposés sur le terrain et les stocker après un éventuel traitement.

Selon un exemple de réalisation, la régie locale attachée à l'organisation de l'événement sportif comporte :
- une unité de production pour le direct,
- une unité d'édition pour la création de reportages (résumés de la journée, reportage sur un sportif...),
- une unité de structuration et d'indexation automatique,
- une unité d'indexation manuelle,
- une unité d'archivage.

Les flux provenant de chaque caméra sont annotés au fur et à mesure de la journée et comportent notamment un marquage horaire permettant de référencer dans le temps les images du flux. Le contenu vidéo de chaque caméra constitue un document primaire qui est traité par un opérateur. En fonction de l'action en cours, l'opérateur choisit telle ou telle partie d'un document primaire pour constituer un document final qui est associé à l'événement sportif et diffusé. Selon une variante, les modules de structuration et d'indexation automatiques traitent séparément les documents primaires générés dans la journée et y rajoutent des méta-données (« metadata » en Anglais). A tout moment, un opérateur peut intervenir manuellement en rajoutant également de méta-données de haut niveau. L'opérateur peut marquer que certaines séquences sont aptes à répondre plus spécifiquement à certains critères. Par exemple, les actions particulièrement spectaculaires d'un joueur déterminé dans un match de football sont quasi indétectables par un système automatique. Ce type d'information est typiquement introduit à la main. Selon un perfectionnement, l'opérateur associe un indice de satisfaction à une séquence donnée, Si l'indice est important, cette séquence particulièrement intéressante pourra faire l'objet d'un ralenti. Après annotation automatique et éventuellement manuelle, le document final en l'associant éventuellement avec les documents primaires sont archivés et/ou transmis à une unité de reproduction dont le but est de reproduire à la demande d'un utilisateur des séquences qui répondent à certains critères et de créer des reportages (résumés d'un match ou d'une journée d'un tournoi par exemple).

Une fois le document stocké, il peut être traité par des techniques d'indexation soit au niveau de l'unité de stockage, soit au niveau de l'unité de reproduction. Le traitement du document va consister à le découper en séquences répondant à des critères déterminés, suite à ce traitement des méta-données associées au document permettent de sélectionner et retrouver chaque séquences par un moteur de consultation.

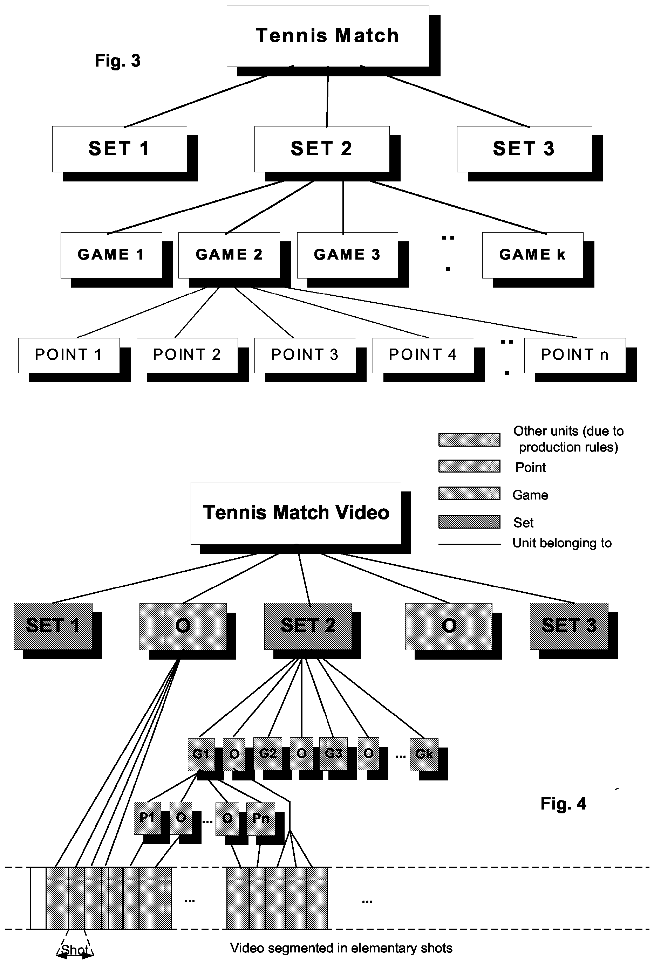

Un premier moyen d'analyse d'un document s'appuie sur la connaissance de la structure du document, la structure permettant un découpage en plans hiérarchiques. Par exemple, la structure hiérarchique d'un match de tennis est montrée à la figure 3. Le match se décompose en set, eux-mêmes étant divisés en jeu, puis en points.

La structuration d'une vidéo peut être définie comme la décomposition de la vidéo en unités sémantiques significatives. Dans le cas des documents vidéos de sport, cette structuration comprend également une phase d'identification des différentes unités sémantiques utilisant la connaissance a priori de la structure du type de sport considéré ainsi que la connaissance a priori des règles de montage. La structuration d'un document audiovisuel consiste à identifier l'appartenance d'un plan à un élément d'une structure imposée par des règles du jeu ou à un élément lié à la façon dont le document vidéo a été réalisé (gros plans, publicités, ralentis...).

La figure 4 montre la structure d'un document audiovisuel contenant un match de tennis. Le découpage en séquence du document dépend de la structure intrinsèque du match de tennis (point, jeu, set et match) et de règles explicites de prises de vue. Les unités provenant directement du montage apparaissent sous la dénomination « autres » (notée O) dans la figure 4.

A titre d'exemples, nous pouvons citer les quelques règles de montage suivantes :
- Une prise de vue ne change pas au cours d'un point (à un point n'est donc associé qu'un seul plan).
- Entre deux points, quelques gros plans ou ralentis sont insérés.
- Des publicités sont insérées tous les deux jeux ainsi qu'entre les sets.

L'analyse de la structure d'un document s'effectue en plusieurs étapes. La première étape consiste à découper la vidéo en plans (un plan étant caractérisé par une unité de prise de vue). A chaque plan est associée une image-clé représentative de l'ensemble des images constitutives du plan considéré. A cette image est associé un certain nombre de caractéristiques décrivant :
- La durée du plan
- L'activité dans le plan (lié au mouvement dans les images)
- La distribution des couleurs dans l'image clé
- La texture de l'image clé

Ces attributs de bas niveau vont être utilisés pour caractériser les différents plans comme étant des plans de jeu ou des plans autres (une probabilité d'appartenance à chaque classe étant calculée).

La seconde étape de l'algorithme va consister à venir plaquer la structure a priori connue du document sur la séquence de plans ainsi identifiés afin de retrouver les différentes unités sémantiques. En d'autres termes, nous cherchons à associer à chaque plan ou groupes de plans une unité sémantique. La méthode opère de la manière suivante.

A chaque unité sémantique est associée plusieurs distributions de probabilité décrivant les valeurs des attributs bas niveaux caractérisant l'unité considérée. Prenons pour exemple le cas de l'unité sémantique de type « autres » séparant deux sets (notée As) et séparant deux points (notée Ap). Considérons pour chacune la distribution associée à l'attribut de durée. Plus la durée d'un groupe de plans adjacents de type « autres »sera importante, plus la probabilité de lui associer une unité As sera grande et plus la probabilité de lui associer une unité Ap sera petite.

Le passage d'une unité sémantique à une autre est également caractérisé par une probabilité dite de transition. Par exemple, la probabilité de transition associée au passage d'une unité sémantique de type set1 vers set2 sera très faible alors que celle décrivant le passage de set1 vers As sera élevée.

L'ensemble des valeurs de probabilité Pt et Pu est calculé lors d'une phase initiale d'apprentissage. Plusieurs heures de vidéos sont ainsi manuellement étiquetées et les probabilités associées sont calculées. Nous pouvons noter ici que la structure du document vidéo n'est pas prise en compte de façon explicite mais résulte d'un apprentissage. Cette propriété permet de décrire des situations pouvant échapper à une approche purement déterministe (des situations non vues lors de l'apprentissage ayant une probabilité très faible mais non nulle de survenir). La structuration d'un document vidéo est alors effectuée en explorant l'ensemble des recalages possibles et en conservant celui qui maximise le produit des probabilités associées aux transitions et à l'étiquetage des groupes de plans en unités sémantiques.

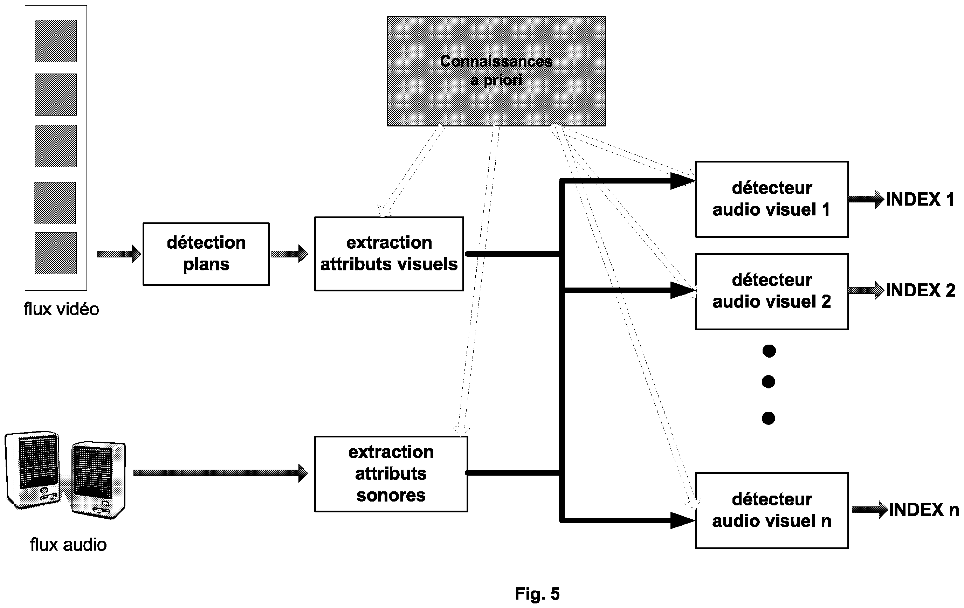

Un second moyen d'analyse d'un document s'appuie sur la caractérisation de plans en fonction d'élément vidéo spécifique. La figure 5 montre un exemple d'un dispositif d'extraction automatique d'index. L'extraction de tels index s'effectue à l'aide de détecteurs travaillant en parallèle et prenant en entrée des informations visuelles et/ou sonores. Pour chaque plan ou groupe de plans de la vidéo, chaque détecteur renvoie une réponse au système indiquant si l'index auquel il est associé est présent à cet instant de la vidéo ou non. Ces détecteurs dépendent fortement du type de vidéo traitée. Pour le football par exemple, les détecteurs intéressants à programmer seront des détecteurs de :
- buts
- coups-francs
- corners
- action devant le but

D'autres moyens d'analyse sont également possibles. Par exemple, l'amplitude du son peut être un moyen pour définir des séquences. En effet, au tennis par exemple, un point se termine très souvent par des applaudissements du public, de ce fait le moyen d'analyse découpe le document en séquences entrecoupées par des augmentations rapides du volume sonore. De plus la puissance sonore des applaudissements est proportionnelle à l'intérêt du point. On peut également citer comme autre technique d'analyse, les mouvements des joueurs. Enfin, il est toujours possible d'intervenir manuellement pour fixer le début et la fin d'une séquence et introduire cette information en tant que méta-donnée, on peut aussi lui affecter un indice de satisfaction.

Une fois le document analysé, les méta-données ainsi générées sont ajoutées aux informations audiovisuelles du document. Un utilisateur peut alors travailler sur ce document à l'aide d'un appareil de traitement et de visualisation, typiquement un ordinateur personnel doté d'une capacité de stockage suffisamment grande. Les méta-données associées permettent d'extraire des éléments de structure et des éléments d'index. Ces méta-données comportent une adresse de pointeur et une durée définissant ainsi une séquence du document, et une valeur d'attribut caractérisant le type de séquence.

Le moteur de consultation peut traiter les ensembles de document suivants
- Soit un seul document déjà traité, ce document dit « final » est par exemple le contenu audiovisuel d'un match diffusé par un opérateur, il est déjà le fruit d'un traitement et les séquences qui le composent sont déjà des contenus sélectionnés. Il dispose déjà de méta-données.
- Soit un ou plusieurs documents dits « primaire » qui proviennent de sources telles que des caméras filmant automatiquement un événement. Le contenu d'un document primaire n'a subi aucun traitement et ne contient pas de méta-données.
- Soit un document final et plusieurs documents primaires qui sont à la source de ce document final.

L'utilisateur lance le moteur de consultation sur son ordinateur doté d'un écran. De façon avantageuse, le moteur de consultation est réalisé sous la forme d'un programme exécutable stocké dans la mémoire de l'ordinateur. On ne doit cependant pas exclure le fait que les fonctionnalités réalisées par l'ensemble constitué de ce programme exécutable, de l'unité centrale et de la mémoire de travail de l'ordinateur puissent être réalisés séparément ou non par des circuits électroniques spécialisés, des ASIC ou des DSP par exemple. Le moteur de consultation est lancé en sélectionnant un ensemble de documents audiovisuel. Dans cet ensemble, un document dit « de référence » sera celui traité par les moyens d'analyse en vue d'obtenir des éléments de structure et des éléments d'index.

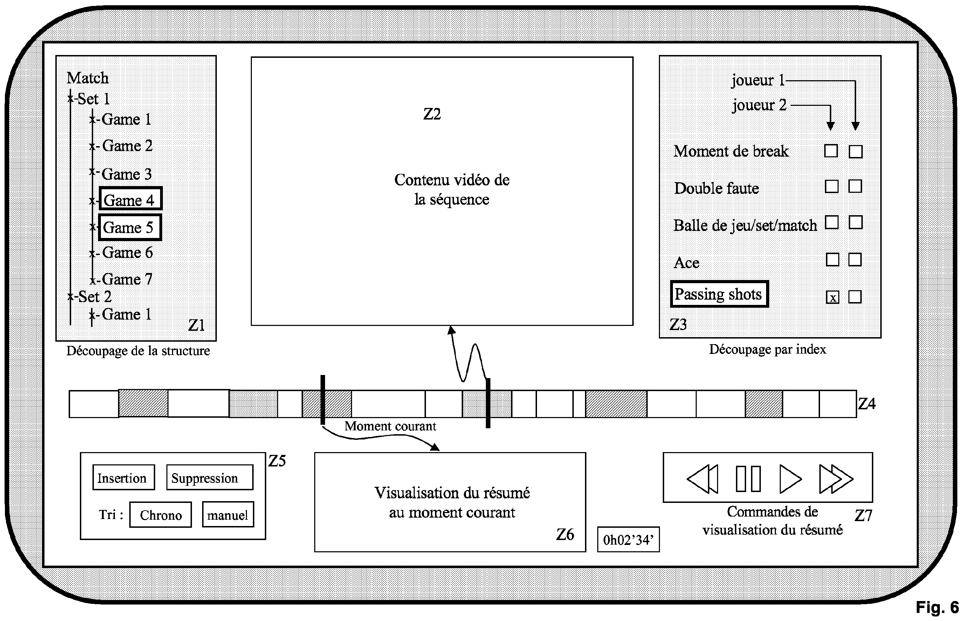

Le moteur de consultation affiche l'apparence d'écran illustré par la figure 6 selon un exemple de réalisation de l'invention. L'utilisateur dispose d'un clavier comportant des touches de direction et des touches de fonction, avec les touches il déplace un index graphique mettant ainsi en évidence un ou plusieurs éléments d'une zone. L'utilisateur appuie sur « ENTER » pour sélectionner l'élément mis en évidence. Une variante consiste à disposer d'un organe de pointage tel qu'une souris. L'utilisateur déplace avec la souris le pointeur et clique sur un bouton de la souris pour sélectionner l'élément pointé. Selon un mode préféré de réalisation, l'écran se décompose en 7 zones principales :
Zone 1 (en haut à gauche) : cette zone montre la structure du document sélectionné. La structure se parcourt de façon hiérarchique en ouvrant et fermant un niveau de hiérarchie donné à l'aide des icônes + et -. L'utilisateur navigue au sein de cette structure en utilisant les touches de direction et sélectionne un élément de la structure en appuyant sur une touche de fonction (typiquement la touche ENTER). Le niveau sélectionné est graphiquement mis en évidence par un contour et une couleur de fond différente).
Zone 2 (en haut au milieu) : c'est la zone de visualisation de la séquence vidéo sélectionné soit par la structure en sélectionnant un élément de la zone 1, soit par un élément d'index en sélectionnant un élément de la zone 3.
Zone 3 (en haut à droite) : cette zone contient des attributs pour la sélection des éléments d'index correspondant à cet attributs. Avantageusement, les attributs possèdent un sous niveau associé à un ou l'autre des joueurs. De cette manière, l'utilisateur peut sélectionner une séquence selon qu'elle concerne l'une ou l'autre équipe ou joueur. A partir du moment où l'utilisateur sélectionne un attribut, cet attribut entre comme critère de sélection pour les séquences. Si l'utilisateur a aussi sélectionné un élément d'index dans la zone 1, alors les séquences sélectionnées devront répondre aux deux critères à la fois. Mais les séquences obtenues par l'un ou l'autre moyen d'analyse ne sont pas généralement pas les mêmes sur le plan du découpage temporel. Par défaut, le moteur de consultation privilégie les séquences d'index qui contiennent une unité sémantique car celles-ci sont plus intéressantes pour un utilisateur. Prenons l'exemple du football, si l'utilisateur choisit les critères « équipe 2 menant au score » et « deuxième mi-temps», alors la séquence où l'équipe 2 mène au score et dont une partie au moins se situe dans la seconde mi-temps est sélectionnée. Par exemple, cette séquence commence vers la fin de la première mi-temps où l'équipe 2 marque un but et mène par 2 à 1, et se termine lorsque en seconde mi-temps l'équipe 1 marque un but et mène par 3 à 2. Selon une variante, la séquence sélectionnée par les critères introduits par l'utilisateur est obtenue par un découpage réalisé par l'un ou l'autre des moyens d'analyse, selon un choix effectué par l'utilisateur. Ce choix est introduit par un sous-menu accessible en option, l'utilisateur sélectionnant soit « analyse par structure » , soit « analyse par index » pour définir quel est le mode de découpage des séquences retenues.
Zone 4 (au milieu de l'écran) : cette zone est une barre graphique représentant tout ou partie du document. La barre est découpée en segments correspondant à des séquences sélectionnables par l'utilisateur. Par défaut, le moteur de consultation privilégie les séquences d'index, ce sont elles qui sont représentées par des segments. Selon la même variante mentionnée dans le paragraphe précédent, l'utilisateur sélectionne par un sous-menu si les séquences sélectionnées par les critères introduits par l'utilisateur proviennent de l'un ou de l'autre des moyens d'analyse. Si l'utilisateur choisit le moyen d'analyse par index alors la barre graphique présente des éléments d'index comme segments de la barre graphique. La largeur du segment est proportionnelle à la durée de la séquence. Dans l'exemple de la figure 6, l'utilisateur a sélectionné en zone 3 les passing shots réussis par le joueur 1 dans les jeux 4 et 5. Sur la barre graphique, les séquences montrant les deux passing shots réalisés par le joueur 1 sont mises en évidence par un grisé. Deux traits verticaux représentent le moment où se situe l'image de la séquence sélectionnée par les critères d'extraction et visualisée en zone 2, et le moment où se situe l'image de la séquence du résumé visualisée en zone 5. De cette manière, l'utilisateur peut situer dans le temps les moments ainsi visualisés. Si l'utilisateur sélectionne directement un segment associé à une séquence, alors cette séquence est visualisée en zone 2 et peut être insérée dans le résumé par une commande d'insertion activée à partir de la zone 5.
Zone 5 (en bas à gauche) : cette zone contient les commandes de gestion du résumé telles que : insertion des éléments, tri des séquences par ordre chronologique, tri par ordre d'insertion. Lorsque l'utilisateur décide d'insérer la ou les séquence(s) obtenue(s) par sélection d'éléments de structure et/ou d'index, il active l'icône marqué « Insertion ». Si l'utilisateur désire supprimer une séquence du résumé, il active le segment associé à cette séquence sur la barre graphique en zone 4. La zone 6 affiche alors le contenu de la séquence ce qui permet un contrôle supplémentaire. Pour supprimer la séquence du résumé actuel, l'utilisateur active l'icône marqué « suppression » de la zone 5. Si l'utilisateur désire que les séquences actuellement sélectionnées et qui constitue le résumé soient enregistrées chronologiquement, alors il active l'icône marqué « Chrono ». Par contre, si l'utilisateur désire que les séquences actuellement sélectionnées soient enregistrées dans le résumé selon l'ordre où elle ont été sélectionnées, alors il active l'icône marqué « Manuel ». Le résumé ainsi élaboré est un fichier de données vidéo enregistré dans l'ordinateur.
Zone 6 (en bas au milieu) : cette zone contient la vidéo du résumé obtenu par sélection d'éléments de structure ou d'index. Le résumé est obtenu par concaténation des séquences selon un ordre chronologique. Avantageusement, la barre graphique montre par une distinction graphique si un segment est ou non intégré dans le résumé. Dans l'exemple, la distinction graphique est faite par des hachures. Un compteur de temps est affiché à coté de la zone 6, montrant la durée totale du résumé actuellement élaboré par les insertions demandées par l'utilisateur.
Zone 7 (en bas à droite) : cette zone contient les commandes de visualisation du résumé : lecture, retour rapide, avance rapide, arrêt sur image. L'activation de ces commandes agit directement sur le contenu vidéo de la zone 6.

Selon un aspect important de la présente invention, la sélection d'une ou plusieurs séquence(s) peut s'effectuer en sélectionnant un critère lié à la structure du document (par exemple : c'est une séquence du jeu 4 ou 5) et à un index (par exemple, c'est un point remporté par le joueur par un passing shot). Les zones 1 et 3 sont donc activables individuellement par le fait que l'utilisateur sélectionne un ou plusieurs éléments affichés. Si aucun élément n'est mis en évidence, le moyen d'analyse n'est pas sélectionné et n'intervient pas dans la sélection de la séquence. Ainsi, l'utilisateur peut :
- soit sélectionner des séquences en utilisant un critère défini par l'analyse structurelle du document,
- soit sélectionner des séquences en utilisant un critère défini par un index appliqué au document,
- soit les deux.

Dans l'exemple illustré par la figure 6, l'utilisateur a sélectionné les passing shots réalisés par le joueur 1, au cours des jeux 4 et 5 du match.

L'utilisateur peut utiliser de deux manières son moteur de consultation. Soit il désire visualiser uniquement des séquences, et dans ce cas il n'utilise que les zones 1, 2 et 3, soit il désire créer un résumé du document, en utilisant l'ensemble des zones affichées. Dans le premier cas, l'utilisateur navigue dans le contenu vidéo en sélectionnant soit des éléments de structure, soit des éléments d'index. L'utilisation d'une seule interface lui permet de naviguer rapidement et d'exploiter pleinement les résultats d'analyse du document. Dans le second cas, l'utilisateur réalise un résumé en fonction de critères déterminés et enregistre ce résumé pour le visualiser pour tard, ou pour le diffuser à d'autres utilisateurs.

Prenons l'exemple du tennis, au cours de la journée, des caméras disposées autour d'un court ont filmé automatiquement plusieurs rencontres sportives. Plus tard, un journaliste souhaite construire un résumé d'un de ces rencontres. On lui donne alors accès aux documents primaires obtenus par les caméras. Il lance l'application qui va tout d'abord analyser un des documents primaires. L'analyse va s'effectuer selon les techniques explicitées précédemment, après quelques minutes l'application a créé la table d'index et la table structurelle correspondant à la rencontre. L'application affiche alors un menu permettant à l'utilisateur de pouvoir sélectionner aussi bien des séquences issues de la table d'index que de séquences produites par l'analyse structurelle du match.

Selon un perfectionnement, une méta-donnée associée à chaque représente un indice de satisfaction. Selon une première variante, cet indice est introduit manuellement par un opérateur. Selon une seconde variante, cet indice est calculé automatiquement en analysant par exemple le niveau sonore global de la séquence. Plus le niveau sonore est élevé ce qui traduit une certaine excitation des spectateurs, plus la séquence satisfait ces mêmes spectateurs. Selon un exemple de réalisation, l'indice comporte trois niveaux illustrés par la présence d'un ou plusieurs symboles« 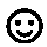 ». Les symboles apparaissent en bas à droite de la zone 2 de visualisation de la séquence. Les symboles apparaissent aussi dans les segments de la barre graphique. De cette manière, l'utilisateur peut facilement voir l'indice de satisfaction des séquences illustrées par la barre graphique. Selon ce perfectionnement, une nouvelle zone 8 est rajoutée à l'apparence d'écran illustrée par la figure 6. Cette zone contient trois boutons sélectionnables par l'utilisateur, un bouton marqué « 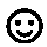 », le second : « 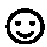 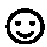 », et le troisième « 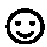 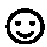 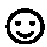 ». L'utilisateur sélectionne un bouton en fonction du niveau d'indice de satisfaction souhaité, ce faisant il ajoute un critère supplémentaire aux autres critères définis par les éléments de structure et par les éléments d'index. Par exemple, L'utilisateur peut sélectionner les séquences du troisième set, marqué « passing shot » par l'analyse d'index et ayant un indice de satisfaction très élevé.

Selon un autre perfectionnement, l'apparence d'écran de la figure 6 comporte une nouvelle zone 9 permettant à l'utilisateur de sélectionner des sources différentes. Un événement sportif est généralement filmé par plusieurs caméras qui produisent des documents primaires. Le document audiovisuel final associé à l'événement est la concaténation de parties extraites de ces documents primaires. Généralement, l'opérateur choisit la source et définit la partie qui sera incluse dans le document final. A partir de ce document final les techniques d'analyse vont générer des éléments structurels ou des éléments d'index. Ces éléments sont définis dans une fenêtre temporelle donnée. Si le moteur de consultation a accès aux documents primaires provenant des différentes sources, l'opérateur peut choisir de remplacer une séquence du document final par une autre séquence issue d'un document primaire et défini par la même fenêtre temporelle. Pour cela, la zone 9 comporte des icônes correspondant aux sources de fourniture de documents primaires et une icône pour sélectionner le document final. L'icône du document final est sélectionnée par défaut au lancement du moteur de consultation. L'utilisateur du moteur de consultation sélectionne une séquence du document final qui est visualisée en zone 2, puis sélectionne l'icône d'une autre source qui clignote. La séquence provenant de cette source et définie par la même fenêtre temporelle est alors visualisée en zone 2. Elle peut être insérée dans le résumé si l'utilisateur active l'icône « Insertion » en zone 5. A la fin de la visualisation de cette séquence, l'icône de l'autre source s'éteint et on revient aux conditions initiales avec l'icône du document final sélectionnée par défaut.

Dans le cas où l'utilisateur dispose uniquement de documents primaires sans avoir un document final, la zone 9 ne contient pas d'icône associé au document final. Donc, l'utilisateur ne dispose pas d'un document de référence lui permettant de découper la durée totale de l'événement en plages temporelles ayant des caractéristiques déterminées. Pour résoudre ce problème, au départ, l'utilisateur du moteur de consultation sélectionne par la même nouvelle fenêtre la source et lance les moyens d'analyse en les appliquant sur le document primaire produit par cette source. Une fois que les analyses sont faites, le document primaire devient le document par défaut. En sélectionnant l'icône d'une source, l'utilisateur peut remplacer la séquence du document primaire par défaut par une autre séquence ayant la même fenêtre temporelle et provenant du document primaire produit par la source sélectionnée en zone 0.

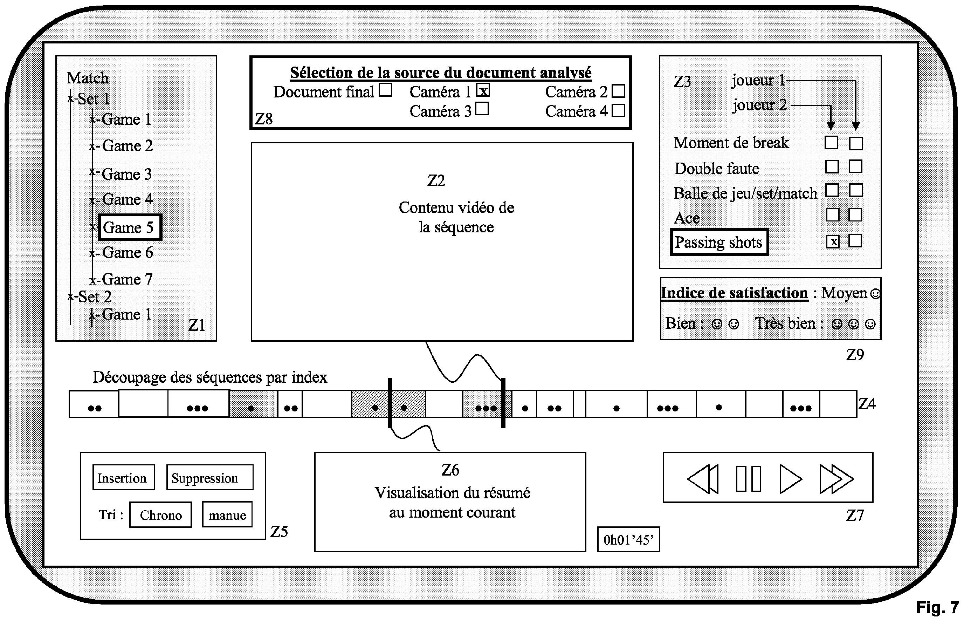

La figure 7 montre une nouvelle apparence d'écran avec les perfectionnements décrits ci-dessus. La page d'écran fait apparaître deux nouvelles zones. La zone 8 située à coté des zones de gestion des deux moyens d'analyse par la structure et par des index permet à un utilisateur d'affecter un indice de satisfaction à la séquence actuellement visualisée. Selon un perfectionnement, cet indice qui comprend quatre niveaux apparaît au niveau de la barre graphique par la présence d'aucun, d'un, de deux ou de trois points sur chaque segment. De cette façon, à l'aide de la barre graphique l'utilisateur remarque tout de suite les séquences de grand intérêt, et en sélectionnant le segment, faire apparaître la séquence en zone 2. Une zone 9 est placée au dessus de la zone 2 de visualisation. Cette zone contient cinq icônes permettant à l'utilisateur de sélectionner la source de la séquence qu'il recherche, ou la source du document qu'il veut analyser.

Voici un exemple d'utilisation du moteur de consultation en vue de la création d'un résumé d'un match de tennis. L'utilisateur navigue dans la hiérarchie en sélectionnant le premier set, puis le premier jeu, le dernier point et enfin la séquence contenant l'échange. La reproduction de la séquence sélectionnée s'effectue aussitôt en zone 2. L'utilisateur peut ainsi vérifier qu'elle présente effectivement un intérêt.

Si la séquence est intéressante, il clique sur le bouton « insertion » de la zone 5 afin d'ajouter cette séquence à l'ensemble des séquences qui constitue le résumé.

Il agit de même pour l'ensemble des plans à intégrer au résumé. Dans le cas où il n'ait pas repéré au préalable les plans susceptibles de l'intéresser, il peut utiliser l'interface afin de naviguer rapidement dans le contenu et sélectionner les points à inclure dans le résumé.

Il ajoute enfin la balle de match en sélectionnant le dernier plan du dernier jeu du dernier set.

Selon un perfectionnement, l'utilisateur peut définir le format du résumé ainsi créé en vue d'un stockage. Par exemple, le résumé peut être constitué de page de type html, facile à télécharger du réseau Internet.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé de sélection de parties d'un document audiovisuel, comportant :
- une étape d'analyse (1.3) du document par au moins deux moyens de découpage différents produisant deux groupes de séquences différentes extraites du document audiovisuel, au moins un des deux moyens de découpage étant configuré pour découper le document audiovisuel en plans hiérarchiques associés à des unités sémantiques significatives prédéfinies en utilisant une connaissance a priori de la structure du type de contenu du document audiovisuel, l'autre moyen de découpage étant configuré pour découper le document audiovisuel en séquences et les indexer en fonction d'un ou plusieurs éléments vidéo spécifiques ;
- introduction (1.4) d'au moins deux critères de sélection de séquences, chacun étant associé à un desdits moyens de découpage, au moins un desdits critères de sélection de séquences comprenant un plan hiérarchique, l'autre critère de sélection comprenant un ou plusieurs éléments vidéo spécifiques ; et
- sélection (1.5) d'au moins une séquence d'un desdits groupes en fonction d'un desdits critères de sélection introduit associé à un desdits moyens de découpage, une partie au moins de la séquence sélectionnée est commune à une autre séquence de l'autre groupe, cette autre séquence répondant à un autre critère de sélection introduit associé à l'autre moyen de découpage.

2. Procédé selon la revendication 1 ; comportant une étape d'élaboration d'un résumé obtenu par la concaténation des séquences sélectionnées, les séquences étant ordonnées dans l'ordre chronologique défini dans le document audiovisuel initial.

3. Procédé selon la revendication 1 ; comportant une étape d'élaboration d'un résumé obtenu par la concaténation des séquences sélectionnées, les séquences étant ordonnées selon l'ordre défini par l'introduction des critères de sélection.

4. Procédé selon l'une quelconque des revendications 1 à 3 ; dans lequel le document audiovisuel initial est composé de documents primaire et/ou final issus de sources différentes, le procédé comportant une étape de sélection d'un document primaire et/ou final, les moyens de découpage produisant les groupes de séquences à partir du document primaire et/ou final sélectionné.

5. Procédé selon la revendication 4 ; comportant une étape de substitution d'une séquence sélectionné par une autre séquence extraite d'un autre document primaire et/ou final et possédant la même fenêtre temporelle que la séquence substituée.

6. Procédé selon l'une quelconque des revendications précédentes ; comportant une étape d'élaboration d'un indice de satisfaction affecté à une séquence élaborée par un des moyens de découpage ; ledit indice étant un critère de sélection.

7. Procédé selon la revendication 6 ; dans lequel l'indice de satisfaction prévient de l'analyse d'une grandeur physique de la séquence, tel que le son.

8. Procédé selon l'une quelconque des revendications précédentes ; comportant une étape d'affichage d'une barre graphique représentant une partie au moins du document initial selon le temps et montrant la position des séquences sélectionnées.

9. Dispositif de visualisation de contenus vidéo comportant
- au moins deux moyens de découpage différents, chaque moyen de découpage produisant un groupe de séquences vidéo extraites d'un document vidéo ou audiovisuel au moins un des deux moyens de découpage étant configuré pour découper le document audiovisuel en plans hiérarchiques associés à des unités sémantiques significatives prédéfinies en utilisant une connaissance a priori de la structure du type de contenu du document audiovisuel, l'autre moyen de découpage étant configuré pour découper le document audiovisuel en séquences et les indexer en fonction d'éléments vidéo spécifiques ;
- et une interface graphique comportant:
▪ deux zones (Z1, Z3) au moins affichant chacune une liste de critères de sélection associés chacun à un desdits moyen de découpage, au moins un desdits critères de sélection de séquences comprenant un plan hiérarchique, l'autre critères de sélection comprenant un ou plusieurs éléments vidéo spécifiques,
▪ un moyen (Z1, Z3) pour sélectionner au moins un critère dans chacune des deux listes de critères affichées,
▪ une zone de visualisation (Z2 ; ZS) d'au moins une séquence d'un desdits groupes en fonction d'un critère de sélection associé à un desdits moyens de découpage, une partie au moins de la séquence sélectionnée est commune à une autre séquence de l'autre groupe, cet autre séquence répondant à un autre critère de sélection associé à l'autre moyen de découpage.

10. Dispositif selon la revendication 9 ; comportant un moyen d'élaboration d'un résumé obtenu par la concaténation des séquences sélectionnées, les séquences étant ordonnées dans l'ordre chronologique défini dans le document audiovisuel initial.

11. Dispositif selon la revendication 10 ; comportant un moyen d'élaboration d'un indice de satisfaction affecté à une séquence élaborée par un des moyens de découpage ; ledit indice étant un critère de sélection.

12. Dispositif selon la revendication 11 ; dans lequel le moyen d'élaboration d'un indice de satisfaction consiste à analyser une grandeur physique de la séquence, tel que le son.

13. Dispositif selon la revendication 11 ou 12 ; comportant un moyen d'affichage d'au moins une icône associée à la représentation d'une séquence montrant la valeur de l'indice de satisfaction associé à cette séquence.

14. Dispositif selon l'une quelconque des revendications 9 à 13 ; comportant un moyen d'affichage d'une barre graphique représentant une partie au moins du document initial selon le temps et montrant la position des séquences sélectionnées.

## Patentansprüche

1. Verfahren zum Auswählen von Teilen eines audiovisuellen Dokuments, das umfasst:
- einen Schritt zur Analyse (1.3) des Dokuments durch mindestens zwei verschiedene Mittel zum Schneiden, die zwei Gruppen von verschiedenen Sequenzen erzeugen, die dem audiovisuellen Dokument entnommen wurden, wobei mindestens eines der zwei Mittel zum Schneiden so konfiguriert ist, um das audiovisuelle Dokument in hierarchische Ebenen zu schneiden, die mit vorher festgelegten, bedeutenden semantischen Einheiten verbunden sind, unter Anwendung einer Vorabkenntnis der Struktur der Art des Inhalts des audiovisuellen Dokuments, wobei das andere Mittel zum Schneiden so konfiguriert ist, um das audiovisuelle Dokument in Sequenzen zu schneiden und sie in Abhängigkeit von einem oder mehreren spezifischen Videoelementen zu indizieren;
- Einführung (1.4) von mindestens zwei Kriterien zur Auswahl von Sequenzen, wobei jedes mit einem der besagten Mittel zum Schneiden verbunden ist, wobei mindestens eines der besagten Kriterien zur Auswahl von Sequenzen eine hierarchische Ebene umfasst, wobei das andere Auswahlkriterium ein oder mehrere spezifische Videoelemente umfasst; und
- Auswahl (1.5) von mindestens einer Sequenz von einer der besagten Gruppen in Abhängigkeit von einem der besagten eingeführten Auswahlkriterien, das mit einem der besagten Mittel zum Schneiden verbunden ist, mindestens ein Teil der ausgewählten Sequenz einer anderen Sequenz der anderen Gruppe gemeinsam ist, wobei diese andere Sequenz auf ein anderes eingeführtes Auswahlkriterium, das mit dem anderen Mittel zum Schneiden verbunden ist, anspricht.

2. Verfahren nach Anspruch 1, umfassend einen Schritt zur Erstellung einer Zusammenfassung, die durch die Verkettung der ausgewählten Sequenzen erhalten wird, wobei die Sequenzen in der chronologischen Reihenfolge, die in dem ursprünglichen audiovisuellen Dokument festgelegt ist, angeordnet werden.

3. Verfahren nach Anspruch 1, umfassend einen Schritt zur Erstellung einer Zusammenfassung, die durch die Verkettung der ausgewählten Sequenzen erhalten wird, wobei die Sequenzen entsprechend der Ordnung, die durch die Einführung der Auswahlkriterien festgelegt ist, angeordnet werden.

4. Verfahren nach einem der Ansprüche 1 bis 3, in welchem das ursprüngliche audiovisuelle Dokument aus primären und/oder finalen Dokumenten, die aus verschiedenen Quellen stammen, zusammengesetzt ist, wobei das Verfahren einen Schritt zur Auswahl eines primären und/oder finalen Dokuments umfasst, wobei die Mittel zum Schneiden Gruppen von Sequenzen anhand des ausgewählten primären und/oder finalen Dokuments erzeugen.

5. Verfahren nach Anspruch 4, umfassend einen Schritt des Ersetzens einer ausgewählten Sequenz durch eine andere Sequenz, die einem anderen primären und/oder finalen Dokument entnommen wurde und das gleiche Zeitfenster wie die ersetzte Sequenz hat.

6. Verfahren nach einem der vorhergehenden Ansprüche, umfassend einen Schritt zur Erstellung eines Zufriedenheitsindexes, der einer durch eines der Mittel zum Schneiden erstellten Sequenz zugeordnet ist, wobei der besagte Index ein Auswahlkriterium ist.

7. Verfahren nach Anspruch 6, in welchem der Zufriedenheitsindex auf die Analyse einer physikalischen Größe der Sequenz, wie dem Ton, verweist.

8. Verfahren nach einem der vorhergehenden Ansprüche, umfassend einen Schritt zum Anzeigen einer grafischen Leiste, die mindestens einen Teil des ursprünglichen Dokuments entsprechend der Zeit darstellt und die Position der ausgewählten Sequenzen zeigt.

9. Vorrichtung zur Visualisierung von Videoinhalten, die umfasst:
- mindestens zwei verschiedene Mittel zum Schneiden, wobei jedes Mittel zum Schneiden eine Gruppe von Videosequenzen erzeugt, die einem Video- oder audiovisuellem Dokument entnommen wurden, wobei mindestens eines der zwei Mittel zum Schneiden so konfiguriert ist, um das audiovisuelle Dokument in hierarchische Ebenen zu schneiden, die mit vorher festgelegten, bedeutenden semantischen Einheiten verbunden sind, unter Anwendung einer Vorabkenntnis der Struktur der Art des Inhalts des audiovisuellen Dokuments, wobei das andere Mittel zum Schneiden so konfiguriert ist, um das audiovisuelle Dokument in Sequenzen zu schneiden und sie in Abhängigkeit von spezifischen Videoelementen zu indizieren;
- eine grafische Schnittstelle, die umfasst:
▪ zwei Bereiche (Z1, Z3) mindestens, von denen jeder eine Liste von Auswahlkriterien anzeigt, von denen jedes mit einem der besagten Mittel zum Schneiden verbunden ist, wobei mindestens eines der besagten Kriterien zur Auswahl von Sequenzen eine hierarchische Ebene umfasst, wobei das andere Auswahlkriterium ein oder mehrere spezifische Videoelemente umfasst,
▪ ein Mittel (Z1, Z3) zur Auswahl von mindestens einem Kriterium in jeder der zwei angezeigten Listen mit Kriterien,
▪ einen Visualisierungsbereich (Z2, ZS) von mindestens einer Sequenz einer der besagten Gruppen in Abhängigkeit von einem Auswahlkriterium, das mit einem der besagten Mittel zum Schneiden verbunden ist, mindestens ein Teil der ausgewählten Sequenz mit einer anderen Sequenz der anderen Gruppe gemeinsam ist, wobei diese andere Sequenz auf ein anderes Auswahlkriterium, das mit dem anderem Mittel zum Schneiden verbunden ist, anspricht.

10. Vorrichtung nach Anspruch 9, umfassend ein Mittel zur Erstellung einer Zusammenfassung, die durch die Verkettung der ausgewählten Sequenzen erhalten wird, wobei die Sequenzen in der chronologischen Reihenfolge, die in dem ursprünglichen audiovisuellen Dokument festgelegt ist, angeordnet werden.

11. Vorrichtung nach Anspruch 10, umfassend ein Mittel zur Erstellung eines Zufriedenheitsindexes, der einer durch eines der Mittel zum Schneiden erstellten Sequenz zugeordnet ist, wobei der besagte Index ein Auswahlkriterium ist.

12. Vorrichtung nach Anspruch 11, in welcher das Mittel zur Erstellung eines Zufriedenheitsindexes darin besteht, eine physikalische Größe der Sequenz, wie den Ton, zu analysieren.

13. Vorrichtung nach Anspruch 11 oder 12, umfassend ein Mittel zum Anzeigen von mindestens einem Icon, das mit der Darstellung einer Sequenz verbunden ist, die den Wert des mit dieser Sequenz verbundenen Zufriedenheitsindexes zeigt.

14. Vorrichtung nach einem der Ansprüche 9 bis 13, umfassend ein Mittel zum Anzeigen einer grafischen Leiste, die mindestens einen Teil des ursprünglichen Dokuments entsprechend der Zeit darstellt und die Position der ausgewählten Sequenzen zeigt.

## Claims

1. Method for selecting parts of an audiovisual document, comprising:
- a step for analysing (1.3) the document by at least two different segmenting means producing two groups of different sequences extracted from the audiovisual document, at least one of the two segmenting means for segmenting the audiovisual document into hierarchical plans associated with significant semantic units predefined by using a prior knowledge of the structure of the content type of the audiovisual document, the other segmenting means being configured for segmenting the audiovisual document into sequences and indexing them according to one or more specific video elements;
- introduction (1.4) of at least two sequence selection criteria, each one being associated with one of said segmenting means, at least one of said sequence selection criteria comprising a hierarchical plan, the other criteria comprising one or more specific video elements; and
- selection (1.5) of at least one sequence of one of said groups according to one of said introduced selection criteria associated with one of said segmenting means, a part at least of the selected sequence is common to another sequence of the other group, this other sequence responding to another introduced selection criterion associated with the other segmenting means.

2. Method according to claim 1; comprising a step for generating a summary obtained by the concatenation of selected sequences, the sequences being ordered in the chronological order defined in the original audiovisual document.

3. Method according to claim 1; comprising a step for generating a summary obtained by the concatenation of selected sequences, the sequences being ordered according to the order defined by the introduction of the selection criteria.

4. Method according to any one of claims 1 to 3; wherein the original audiovisual document comprises primary and/or final documents from different sources, the method comprising a selection step of a primary and/or final document, the segmenting means producing the sequence groups from the selected primary and/or final document.

5. Method according to claim 4; comprising a substitution step of a sequence selected by another sequence extracted from another primary and/or final document and having the same time window as the substituted sequence.

6. Method according to any one of the aforementioned claims; comprising a step for generating a satisfaction index assigned to a sequence generated by one of the segmenting means; said index being a selection criterion.

7. Method according to claim 6; in which the satisfaction index comes from the analysis of a physical quantity of the sequence, such as the sound.

8. Method according to any one of the aforementioned claims;
comprising a display step of a graphic bar representing at least part of the original document according to the time and showing the position of the selected sequences.

9. Video content display device comprising
- at least two different segmenting means, each segmenting means producing a group of video sequences extracted from a video or audiovisual document, at least one of the two segmenting means for segmenting the audiovisual document into hierarchical plans associated with significant semantic units predefined by using a prior knowledge of the structure of the type of content of the audiovisual document, the other segmenting means being configured for segmenting the audiovisual document into sequences and indexing them according to specific video elements;
- and a graphic interface comprising:
▪ two zones (Z1, Z3) at least displaying each one a list of selection criteria, each one associated with one of said segmenting means, at least one of said sequence selection criteria comprising a hierarchical plan, the other selection criteria comprising one or more specific video elements,
▪ a means (Z1, Z3) for selecting at least one criterion in each of the two lists of displayed criteria,
▪ a visualisation zone (Z2, ZS) of at least one sequence of one of said groups according to a selection criteria associated with one of said segmenting means, part at least of the selected sequence is common to another sequence of the other group, this other sequence responding to another selection criterion associated with the other segmenting means.

10. Device according to claim 9; comprising a means for generating a summary obtained by the concatenation of selected sequences, the sequences being ordered in the chronological order defined in the original audiovisual document.

11. Device according claim 10, comprising a means for generating a satisfaction index assigned to a sequence generated by one of the segmenting means; said index being a selection criterion.

12. Device according to claim 11; wherein the means for generating a satisfaction index consists in analysing a physical quantity of the sequence, such as the sound.

13. Device according to claim 11 or 12; comprising a means for displaying at least one icon associated with the representation of a sequence showing the value of the satisfaction index associated with this sequence.

14. Device according to any of claims 9 to 13; comprising a display means of a graphic bar representing at least part of the original document according to the time and showing the position of the selected sequences.
